(19) Europäisches Patentamt

European Patent Office

Office européen des brevets

(11) Numéro de publication : **0 442 812 A1**

(12) **DEMANDE DE BREVET EUROPEEN**

(21) Numéro de dépôt : **91400371.0**

(22) Date de dépôt : **14.02.91**

(51) Int. Cl.⁵ : **G01V 1/135,** G01V 11/00

(30) Priorité : **14.02.90 FR 9001716**

(43) Date de publication de la demande :
**21.08.91 Bulletin 91/34**

(84) Etats contractants désignés :
**DE DK FR GB IT NL**

(71) Demandeur : **SCHLUMBERGER LIMITED**
**277 Park Avenue**
**New York, N.Y. 10172 (US)**
**GB**
Demandeur : **SERVICES PETROLIERS**
**SCHLUMBERGER, (formerly Société de**
**Prospection Electrique Schlumberger)**
**42, rue Saint-Dominique**
**F-75007 Paris (FR)**
**FR**
Demandeur : **SCHLUMBERGER TECHNOLOGY**
**B.V.**
**Carnegielaan 12**
**NL-2517 KM Den Haag (NL)**
**DE DK IT**
Demandeur : **SCHLUMBERGER HOLDINGS**
**LIMITED**
**P.O. Box 71, Craigmuir Chambers**
**Road Town, Tortola (VG)**
**NL**

(72) Inventeur : **Dorel, Alain**
**Résidence Elysée II, Bat.93, Avenue de la**
**Jonchère**
**F-78170 La Celle St Cloud (FR)**

(74) Mandataire : **Hagel, Francis et al**
**ETUDES ET PRODUCTIONS SCHLUMBERGER**
**Service Brevets B.P. 202**
**F-92142 Clamart Cédex (FR)**

(54) Source sismique de fond et procédé de creation d'ondes acoutiques dans un puits de forage.

(57)    Une source sismique destinée à être placée dans un puits de forage (10) comprend un système résonant (26) que l'on excite à sa fréquence de résonance tout en modifiant cette dernière fréquence de façon contrôlée, pour effectuer un balayage en fréquence. A cet effet, on élève la pression dans l'enceinte (32) contenant la masse de réaction (30) du système résonant (26), jusqu'à une pression statique initiale donnée, au moyen d'un groupe haute pression (60), puis on fait varier la pression dans la chambre supérieure (38) de l'enceinte (32), selon une courbe d'allure sinusoïdale, au moyen d'une électrovanne (52) alimentée par un groupe basse pression (46), tout en faisant varier régulièrement la pression statique, au travers d'une restriction (74).

FIG. 2

# SOURCE SISMIQUE DE FOND ET PROCEDE DE CREATION D'ONDES ACOUSTIQUES DANS UN PUITS DE FORAGE

L'invention concerne une source sismique destinée à être placée dans un puits de forage tel qu'un puits cuvelé de forage pétrolier. L'invention concerne également un procédé de création d'ondes acoustiques mis en oeuvre par une telle source sismique.

Les sources sismiques de fond sont utilisées pour déterminer les caractéristiques géologiques du sous-sol dans la région entourant le puits dans lequel est placée la source. Elles sont conçues de façon à créer des ondes acoustiques et à transmettre ces ondes de façon aussi complète que possible à la paroi interne du puits cuvelé. Des récepteurs tels que des accéléromètres, des géophones ou des hydrophones détectent ces ondes acoustiques après qu'elles aient traversé le sous-sol. Les ondes mesurées permettent, après traitement, de déterminer les caractéristiques des réflecteurs du sous-sol traversé.

Dans une première technique de mesure, appelée sismique entre puits (en anglais, "Cross Well"), les récepteurs sont placés dans des puits distincts du puits contenant la source.

Dans une deuxième technique de mesure, appelée RVSP ("Reverse Vertical Seismic Profile"), les récepteurs sont placés à la surface du sol.

Enfin, les récepteurs peuvent aussi être placés dans le même puits de forage que la source, selon une troisième technique de mesure, dite "Long Spacing Sonic".

Selon le type de mesures que l'on désire réaliser, la force sinusoïdale induite par la source sismique peut être orientée verticalement selon l'axe du puits, afin de créer préfentiellement des ondes P de compression dans l'axe du puits et des ondes de cisaillement à l'orthogonale de l'axe du puits, ou horizontalement afin de créer préférentiellement des ondes S de cisaillement dans l'axe du puits et des ondes de compression à l'orthogonale de l'axe du puits.

Afin que des mesures satisfaisantes puissent être effectuées, l'amplitude de crête de la force sinusoïdale induite par la source sismique doit être suffisante pour que les signaux atténués captés par les récepteurs aient un rapport signal sur bruit autorisant leur exploitation. A l'inverse, cette amplitude de crête ne doit pas dépasser certaines valeurs au-delà desquelles le ciment du puits serait soumis à des contraintes trop élevées. Une force sinusoïdale ayant une amplitude de crête d'environ 20000 N constitue un compromis acceptable sur ce point.

Par ailleurs, la source sismique est habituellement suspendue à un câble qui sert également à transmettre à la source, depuis la surface, la puissance nécessaire à son actionnement, et à transmettre aux appareillages de surface différents signaux issus de capteurs tels que des accéléromètres associés à la source. La puissance d'actionnement, transmise à la source sismique généralement sous forme électrique, est donc limitée à une valeur relativement faible, par exemple inférieure à 2 kW.

L'article "Downhole Periodic Seismic Sources" de H.C. Hardee, Geophysical Prospecting 31, 57-71, 1983, étudie différentes sources sismiques de fond. Il décrit notamment une source comprenant une masse de réaction qui oscille verticalement à fréquence constante dans un corps ancré à la paroi du puits, en réponse à des moyens d'excitation fluidiques. Une source comparable est décrite dans le document US-A-4 783 771, dans le cas particulier d'une source hydraulique.

Dans le document GB-A-2 129 559, il est décrit une source sismique de fond dans laquelle la puissance d'alimentation électrique transmise par le câble sert à actionner une pompe hydraulique. Cette pompe permet, par l'intermédiaire d'une électrovanne, de soumettre une masse de réaction placée dans un cylindre à un mouvement de va-et-vient de fréquence réglable, qui induit la force sinusoïdale désirée.

Dans une source sismique ainsi conçue, il n'est pas possible de satisfaire conjointement aux deux exigences mentionnées précédemment. En d'autres termes, la production de forces ayant une amplitude de crête voisine de 20000 N ne peut être obtenue avec une puissance d'alimentation inférieure à 2 kW. Inversement, une puissance d'alimentation inférieure à 2 kW ne permet pas de produire des forces d'amplitude de crête suffisante pour que des mesures précises et performantes puissent être effectuées.

Le document FR-A-2 614 108 propose, pour résoudre ce problème, l'utilisation d'un système résonant comprenant une masse de réaction à laquelle on applique une force sinusoïdale, à une fréquence d'excitation qui coïncide avec la fréquence de résonance du système.

Cependant, dans ce dernier document la masse de réaction est déplacée par un système électromagnétique qui atteint rapidement des températures élevées difficilement acceptables. De plus, la fréquence de résonance du système résonant ne peut être réglée que lorsque la source sismique est remontée à la surface. Il n'est donc pas possible d'effectuer en une seule opération un balayage en fréquence, alors qu'un tel balayage serait particulièrement utile pour affiner le traitement des signaux captés par les récepteurs.

L'invention a précisément pour objet une source sismique de fond dont la conception originale lui permet d'engendrer une force sinusoïdale d'amplitude de crête élevée à partir d'une puissance d'alimentation électrique limitée (inférieure à 2 kW), tout en assurant un balayage en fréquence dans un domaine que l'on peut ajuster sur la bande passante de la formation.

Selon l'invention, ce résultat est obtenu au moyen d'une source sismique de fond, comprenant un corps apte à être ancré à la paroi d'un puits de forage par des moyens d'ancrage, et dans lequel sont logés un système résonant et des moyens d'excitation de ce système résonant à une fréquence d'excitation accordée sur la fréquence de résonance de ce dernier, caractérisée par le fait que des moyens sont prévus pour faire varier de façon contrôlée la fréquence de résonance du système résonant lors d'un actionnement des moyens d'excitation.

De préférence et afin notamment d'éviter tout risque d'échauffement excessif, le système résonant comprend une masse de réaction mobile dans une première enceinte formée dans le corps, ladite masse délimitant à l'intérieur de l'enceinte deux chambres opposées communiquant avec des moyens élastiques respectifs, les moyens d'excitation comprenant des moyens pour appliquer dans au moins une des chambres opposées une pression hydraulique sinusoïdale, à ladite fréquence d'excitation, et les moyens pour faire varier la fréquence de résonance comprenant des moyens pour appliquer dans la première enceinte une pression hydraulique statique variant de façon contrôlée.

La variation de la fréquence de résonance peut alors être obtenue en appliquant dans la première enceinte une pression statique initiale, puis en faisant varier cette pression progressivement lorsque la pression sinusoïdale est appliquée.

Dans un mode de réalisation préféré de l'invention, on utilise avantageusement une source sismique qui comprend trois enceintes superposées contenant, en partant du bas, le système résonant, un groupe hydraulique basse pression produisant la pression sinusoïdale par l'intermédiaire d'une électrovanne actionnée de façon alternative, et un groupe hydraulique haute pression produisant la pression statique initiale. La décroissance de cette dernière pression est alors obtenue au moyen d'une deuxième électrovanne qui fait communiquer l'enceinte contenant le système résonant avec un réservoir basse pression, au travers d'une restriction de section réglable.

Dans ce mode de réalisation, le groupe hydraulique haute pression est également utilisé pour actionner, au travers d'une troisième électrovanne, les moyens d'ancrage de la source dans le puits, ces moyens d'ancrage étant placés avantageusement entre les deux enceintes inférieures.

Dans un autre mode de réalisation de l'invention, on utilise une source sismique qui comprend deux enceintes superposées. L'enceinte inférieure contient alors le système résonant, ainsi qu'un empilement de pastilles piézoélectriques qui produit la pression sinusoïdale. Dans l'enceinte supérieure, on retrouve le groupe hydraulique haute pression et l'électrovanne servant respectivement à produire la pression statique initiale et à faire décroître progressivement cette pression.

La commande de la source est assurée, de préférence, par un module de commande électronique situé au-dessus du corps de la source et relié à ce dernier par un câble susceptible de découpler mécaniquement le module électronique du corps de la source. Le corps de la source seul est ancré dans le puits, ce qui permet de réduire la masse active de la source et de minimiser les efforts de flexion sur l'ancreur.

L'invention a aussi pour objet un procédé de création d'ondes acoustiques à l'intérieur d'un puits de forage, au moyen d'une source sismique de fond comprenant un système résonant et des moyens d'excitation de ce système résonant, dans lequel on excite le système résonant à une fréquence d'excitation accordée sur la fréquence de résonance de ce système, caractérisé en ce que l'on fait varier de façon contrôlée la fréquence de résonance du système résonant, tout en excitant ce système, de façon à effectuer un balayage en fréquence à une fréquence d'excitation qui reste accordée sur la fréquence de résonance du système résonant.

Un mode de réalisation préféré de l'invention va à présent être décrit, à titre d'exemple non limitatif, en se référant aux dessins annexés, dans lesquels :

– la figure 1 est une vue en coupe illustrant très schématiquement l'implantation d'une source sismique conforme à l'invention dans un puits de forage pétrolier ;

– la figure 2 illustre de façon très schématique les principaux éléments constituant la source sismique de fond conforme à l'invention ;

– la figure 3 est une vue en coupe longitudinale, en trois parties, représentant successivement, de la gauche vers la droite, la partie haute, la partie centrale et la partie basse de la source sismique selon l'invention ;

– la figure 4 est une vue en coupe agrandie selon la ligne IV-IV de la figure 3 ;

– la figure 5 est une courbe représentant les variations de la pression régnant dans la chambre supérieure du système résonant de la sonde, en fonction du temps, lors d'un actionnement de la sonde sismique ; et

– la figure 6 est une vue en coupe longitudinale illustrant de façon schématique la partie inférieure de la source, dans une variante de réalisation de l'invention.

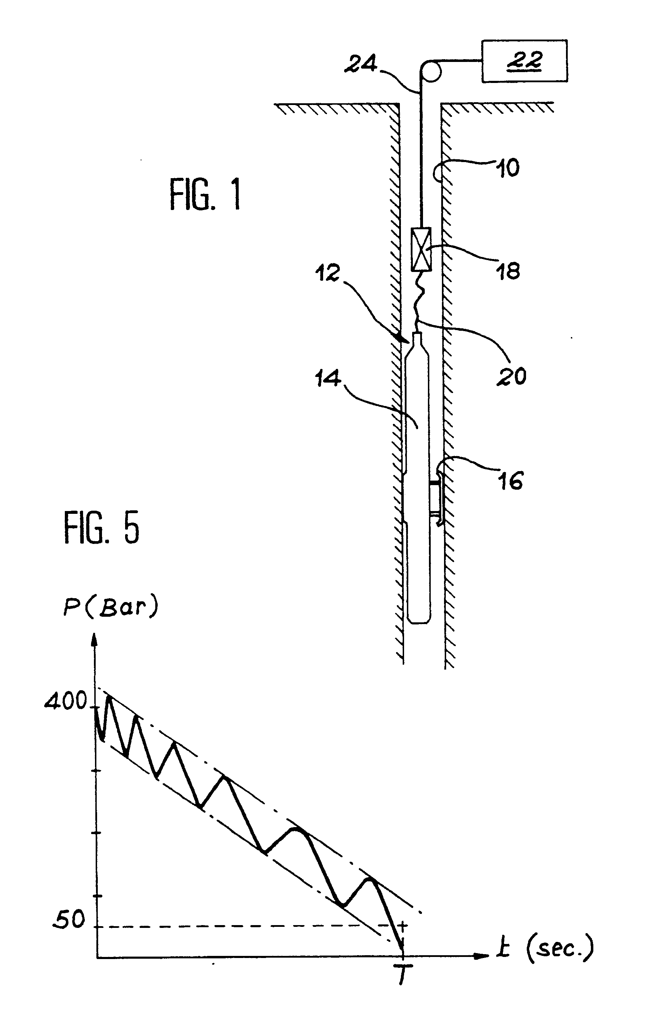

Sur la figure 1, la référence 10 désigne un puits cuvelé de forage pétrolier, traversant une formation souterraine dont on désire analyser la configuration. A cet effet, on descend dans le puits cuvelé 10 une source sismique désignée de façon générale par la référence 12. Selon la technique de mesure utilisée, des récepteurs sont placés soit dans d'autres puits de forage voisins (sysmique entre puits) soit à la surface du sol (technique "RVSP").

Quelle que soit la technique de mesure utilisée, la source sismique 12 est actionnée successivement à différentes profondeurs et les signaux détectés par les récepteurs sont analysés afin de déterminer les caractéristiques des différents réflecteurs constituant le sous-sol environnant le puits 10.

La source sismique 12 conforme à l'invention comprend un module principal 14 contenant la source proprement dite et conçu de façon à pouvoir être ancré fermement dans le puits cuvelé 10 grâce à des moyens d'ancrage 16. La source 12 comprend également, au-dessus du module principal 14 un module de commande électronique 18 qui est relié au module principal 14 par un câble 20 qui n'est pas tendu lorsque les moyens d'ancrage 16 sont actionnés. Le caractère mou du câble 20 permet de découpler mécaniquement la source sismique du module de commande électronique 18 et donc de réduire la masse et la longueur de la partie active de la source.

Ce module de commande électronique 18 sert à piloter la source sismique 12 à partir des informations transmises depuis un ensemble électronique 22 situé en surface, par l'intermédiaire d'un câble 24 auquel est suspendu le module de commande électronique 18.

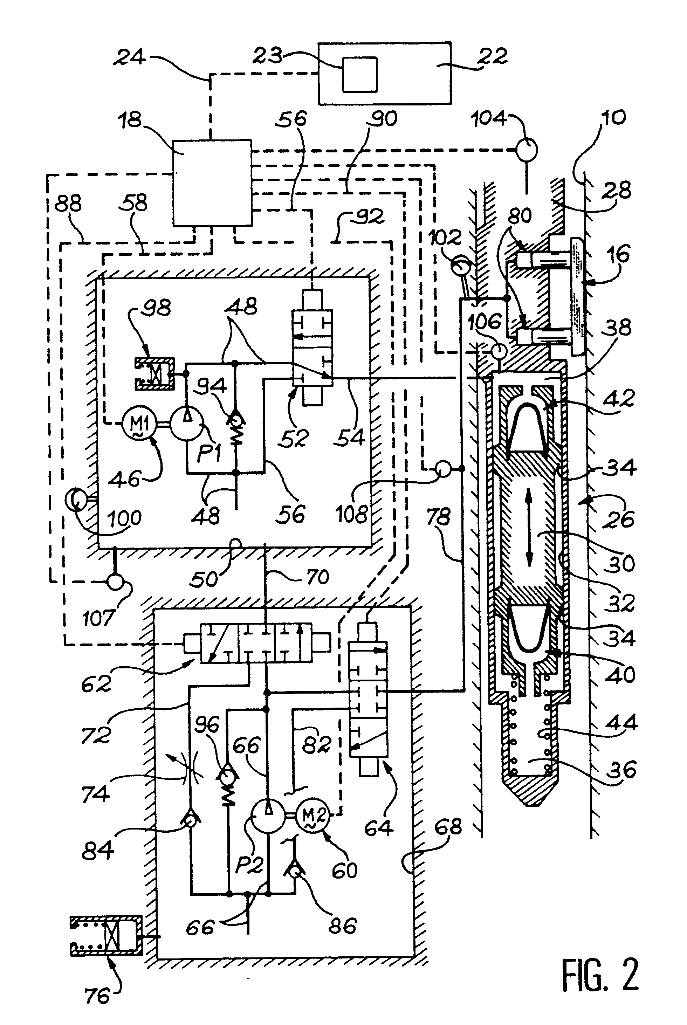

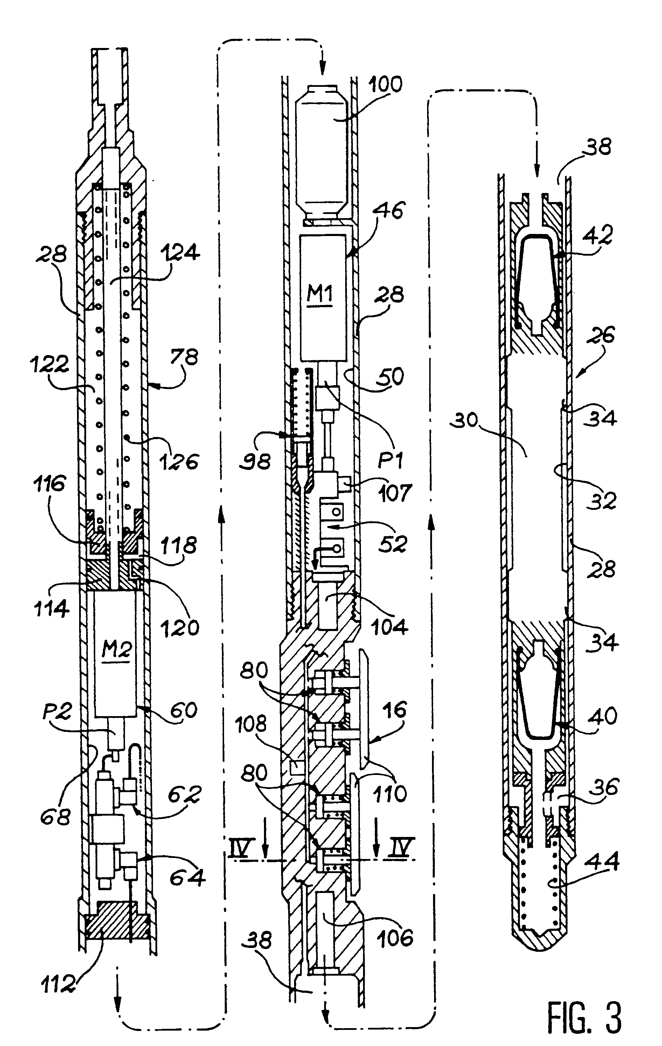

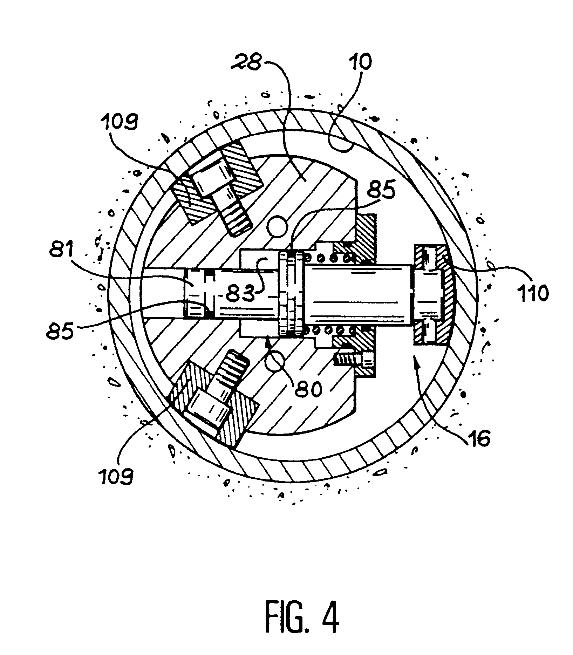

Les principaux éléments constituant le module principal 14 vont à présent être décrits en se référant à la figure 2. L'agencement de ces éléments à l'intérieur du module 14 sera décrit ultérieurement en se référant aux figures 3 et 4.

Sur la partie droite de la figure 2, on a représenté très schématiquement la partie inférieure du corps cylindrique allongé 28 du module principal 14, dans laquelle est logé un système résonant 26, immédiatement en dessous des moyens d'ancrage 16. Le système résonant 26 comprend une masse de réaction 30 mobile parallèlement à l'axe du corps 28 dans une enceinte étanche cylindrique 32 remplie du fluide hydraulique. Le guidage de la masse 30 dans son déplacement à l'intérieur de l'enceinte 32 est assuré par deux paliers lisses 34 qui forment un passage de section réduite pour le fluide hydraulique contenu dans l'enceinte 32.

A l'intérieur de l'enceinte 32, la masse de réaction 30 délimite ainsi une chambre inférieure 36 et une chambre supérieure 38 qui communiquent entre elles par le passage de section réduite formé par les paliers lisses 34.

Le système résonant 26 comprend de plus des moyens élastiques constitués par deux accumulateurs oléopneumatiques 40 et 42 qui communiquent respectivement avec la chambre inférieure 36 et avec la chambre supérieure 38. Dans chacun de ces accumulateurs 42, une poche d'air ou de gaz comprimé est séparée par une membrane souple du fluide hydraulique contenu dans la chambre 36, 38 correspondante. Lorsque le fluide hydraulique contenu dans l'enceinte 32 est sous pression, l'ensemble constitué par la masse de réaction 30 et par les accumulateurs oléopneumatiques 40 et 42 constitue un système résonant dont la fréquence de résonance varie selon la pression du fluide hydraulique contenu dans l'enceinte.

Dans le mode de réalisation illustré sur la figure 2, les accumulateurs oléopneumatiques 40 et 42 sont montés à chacune des extrémités de la masse 30. Dans une variante de réalisation non représentée, ces accumulateurs peuvent être logés dans le corps 28 du module principal.

Afin que la masse 30 occupe une position centrale d'équilibre à l'intérieur de l'enceinte 32 lorsque la source sismique n'est pas actionnée, un ressort de compression 44 est interposé entre la face inférieure de l'enceinte 32 et la face inférieure de la masse 30. Ce ressort 44 équilibre le poids de la masse de réaction 30 et assure le positionnement souhaité.

Afin que l'encombrement de la masse de réaction 30 soit aussi faible que possible, celle-ci est réalisée en un matériau de forte densité tel que de l'uranium ou du tungstène. Sa masse peut être, par exemple, d'environ 100 kg.

Comme l'illustre très schématiquement la figure 2, le module principal de la source sismique selon l'invention comporte également un groupe basse pression 46 comprenant un moteur électrique M1 qui sert à actionner une pompe P1 apte à délivrer du fluide hydraulique basse pression (environ 60 bars) à un débit relativement élevé (environ 15 l/mn). La pompe P1 est placée sur une canalisation 48 qui relie une deuxième enceinte 50 formée à l'intérieur du corps 28 du module principal à un premier orifice d'entrée d'une électrovanne 52 dont l'un des orifices de sortie communique par une canalisation 54 avec la chambre supérieure 38 formée dans l'enceinte 32. La deuxième entrée de l'électrovanne 52 communique directement avec l'enceinte 50 par une canalisation 56.

L'électrovanne 52 peut occuper alternativement une première position (en bas sur la figure 2), dans laquelle la canalisation 54 communique avec la première entrée sur laquelle est raccordée la canalisation 48, et une deuxième position (en haut sur la figure 2), dans laquelle la canalisation 54 communique avec la deuxième entrée sur laquelle est raccordée la canalisation 56. Dans la pratique, l'électrovanne 52 peut être formée d'une ou plusieurs électrovannes élémentaires.

Dans le mode de réalisation représenté, le groupe basse pression 46 ainsi que l'électrovanne 52 et les canalisations 48 et 56 sont logés directement à l'intérieur de l'enceinte 50.

Des conducteurs électriques 58 passant dans le corps 28 ainsi qu'à l'intérieur du câble lâche 20 relient l'électrovanne 52 au module de commande électronique 18. Lorsque la source sismique est mise en oeuvre, ce dernier module assure le changement d'état de l'électrovanne 52, alternativement entre ses deux positions, à une fréquence déterminée. Sous l'effet de ce changement d'état, la chambre supérieure 38 communique alternativement soit avec la pompe P1, soit directement avec l'enceinte 50. Etant donné que le moteur électrique M1 est également relié au module de commande électronique 18 par un conducteur électrique 56, l'actionnement alternatif de l'électrovanne 52 a pour conséquence de faire varier la pression dans la chambre supérieure 38 de façon sinusoïdale.

La fréquence d'excitation de l'électrovanne 52 est située dans la pratique entre environ 30 Hz et environ 120 Hz. Compte tenu du passage de section réduite formé par les paliers lisses 34, les pertes de charge sont élevées entre la chambre inférieure 36 et la chambre 38. On considère donc qu'il y a une étanchéité dynamique entre les deux chambres, pour des pressions variant dans la gamme de fréquence 30-120 Hz.

Le module principal 14 de la source sismique 12 comporte de plus un groupe haute pression 60 comportant un moteur électrique M2 qui entraîne une pompe P2. Ce groupe haute pression 60 délivre une pression élevée (environ 400 bars) à un débit relativement faible (environ 0,15 l/mn). Il permet, au travers d'une électrovanne 62, d'établir à l'intérieur de l'enceinte 32 du système résonant 26 une pression hydraulique statique initiale, avant la mise en oeuvre du groupe basse pression 46. Il permet aussi, à travers une autre électrovanne 64, de commander l'actionnement des moyens d'ancrage 16.

Pour permettre d'accomplir la première de ces fonctions, la pompe P2 est placée dans une canalisation 66 qui relie un réservoir basse pression délimité par une troisième enceinte 68 formée dans le corps 28, à un premier orifice d'entrée de l'électrovanne 62. L'un des orifices de sortie de l'électrovanne 62 (à droite sur la figure 2) communique quant à lui avec la deuxième enceinte 50 par une canalisation 70, de telle sorte qu'un actionnement de la pompe P2 a pour effet d'accroître la pression à l'intérieur de la deuxième enceinte 50. Etant donné que cette dernière communique en permanence avec la première enceinte 32 du système résonant 26, au travers de l'électrovanne 52 et de la canalisation 54, on peut ainsi élever jusqu'à une valeur maximum d'environ 400 bars la pression régnant dans la chambre supérieure 38. Du fait de la mobilité de la masse sur les paliers lisses 34, la pression dans la chambre inférieure 36 est élevée à la même valeur.

La deuxième entrée de l'électrovanne 62 communique avec le réservoir basse pression formé par la troisième enceinte 68, par l'intermédiaire d'une canalisation 72 dans laquelle est placée une restriction 74 dont la section peut avantageusement être réglée. Lorsque ce deuxième orifice d'entrée de l'électrovanne 62 communique avec l'orifice de sortie sur lequel est raccordée la canalisation 70, une diminution progressive et contrôlée de la pression dans la deuxième enceinte 50 et, par conséquent, dans la première enceinte 32 est obtenue.

L'électrovanne 62, qui peut dans la pratique être constituée par une ou plusieurs électrovannes élémentaires, occupe au repos une position illustrée sur la figure 2, dans laquelle aucune des canalisations 66 et 72 ne communique avec la canalisation 70. Dans une première position active de l'électrovanne 62, illustrée sur la droite de la figure 2, la canalisation 66 communique avec la canalisation 70, alors que cette dernière reste isolée de la canalisation 72. Cette position correspond donc à la montée en pression dans les chambres 50 et 32. Au contraire, dans une deuxième position active de l'électrovanne 62 illustrée sur la gauche en considérant la figure 2, la canalisation 66 ne communique plus avec la canalisation 70, alors que cette dernière communique avec la canalisation 72. Cette deuxième position active correspond à une décroissance régulière et progressive de la pression dans les enceintes 50 et 32.

Afin que la pression régnant dans la chambre basse pression formée par l'enceinte 68 soit constante, indépendamment de la pression extérieure, cette enceinte 68 communique avec un accumulateur 76 régulateur de pression. Le réglage initial de cet accumulateur permet, par exemple, de maintenir en permanence dans l'enceinte 68 une pression constante d'environ 40 bars.

Comme on l'a mentionné précédemment, le groupe haute pression 60 permet également de commander les moyens d'ancrage 16 au travers de l'électrovanne 64. A cet effet, une première entrée de l'électrovanne 64 est branchée en dérivation sur la canalisation 66, en aval de la pompe P2. Une première sortie de l'électrovanne 64 communique par une canalisation 78 avec des vérins d'actionnement 80 des moyens d'ancrage 16. Lorsque l'électrovanne 64 fait communiquer la première entrée et la première sortie, un actionnement de la pompe P2 a donc pour effet de mettre en oeuvre les vérins 80 pour assurer l'ancrage du module principal de la source sismique dans le puits de forage.

La deuxième entrée de l'électrovanne 64 est reliée par une canalisation 82 directement à la chambre basse pression délimitée par l'enceinte 68. Par conséquent, lorsque la canalisation 78 est reliée à la canalisation 82 au travers de l'électrovanne 64, la pression dans les vérins 80 est relâchée et le module principal de la source sismique n'est pas ancré dans le puits de forage.

Des clapets de non retour 84 et 86 sont placés respectivement dans les canalisations 72 et 82 afin d'empêcher toute circulation du fluide hydraulique de l'enceinte 68 vers les électrovannes 62 et 64 au travers de ces canalisations.

Comme l'électrovanne 62, l'électrovanne 64 peut être constituée par une ou plusieurs électrovannes élémentaires. Cette électrovanne 64 occupe normalement au repos la position illustrée sur la figure 2 dans laquelle aucun des orifices d'entrée ne communique avec l'orifice de sortie sur lequel est raccordée la canalisation 78.

Dans une première position active de l'électrovanne 64 illustrée en haut sur la figure 2, l'orifice d'entrée raccordé sur la canalisation 66 communique avec l'orifice de sortie raccordé sur la canalisation 78. Cette position correspond donc à l'actionnement des vérins 80.

Au contraire, dans une deuxième position active illustrée en bas sur la figure 2, l'orifice de sortie sur lequel est raccordée la canalisation 78 communique avec l'orifice d'entrée sur lequel est raccordée la canalisation 82. Cette deuxième position active correspond donc au relâchement des vérins 80.

Comme l'illustre schématiquement la figure 2, le groupe haute pression 60 ainsi que les électrovannes 62 et 64 sont placés à l'intérieur de la troisième enceinte 68.

Chacune des électrovannes 62 et 64 ainsi que le moteur M2 sont commandés depuis le module de commande électronique 18 par des conducteurs représentés schématiquement en 88, 90 et 92. Ces conducteurs traversent le corps 28 du module principal 14 et cheminent ensuite dans le câble lâche 20.

De façon classique, une canalisation comportant un clapet anti-retour 94 et 96 est montée en parallèle respectivement sur les pompes P1 et P2. La pompe P1 est également protégée par le raccordement d'un accumulateur 98 sur la canalisation 48, en aval de la pompe P1.

Des- accumulateurs oléopneumatiques 100 et 102 communiquent respectivement avec la deuxième enceinte 50 et avec la canalisation 78 afin de prendre en compte les variations de volume du fluide hydraulique.

Afin de fournir à l'ensemble électronique de surface 22 les informations nécessaires à une bonne connaissance des ondes sismiques créées par la source 12, un capteur de pression 106 est branché sur la chambre supérieure 38 et un accéléromètre 104 est fixé sur le corps 28 du module principal. Un capteur de pression 107 est également branché sur la deuxième enceinte 50. De plus, l'état des vérins 80 peut être contrôlé au moyen d'un capteur de pression 108 raccordé sur la canalisation 78.

L'agencement structurel des différents éléments qui viennent d'être décrits de façon schématique en se référant à la figure 2 va à présent être décrit plus en détail en se référant aux figures 3 et 4.

Comme l'illustre la figure 3, le corps 28 du module principal 14 présente de façon générale la forme d'un tube allongé dans lequel sont formées successivement, en partant du bas, la première enceinte 32 contenant le système résonant 26, la deuxième enceinte 50 contenant notamment le groupe basse pression 46, et la troisième enceinte 68 contenant le groupe haute pression 60. Les moyens d'ancrage 16 sont placés entre la première enceinte 32 et la deuxième enceinte 50.

De façon plus précise, on reconnaît sur la partie droite de la figure 3 la masse de réaction 30 qui coulisse selon l'axe du corps 28 à l'intérieur de l'enceinte 32 par l'intermédiaire des paliers lisses 34. La masse 30 porte à chacune de ses extrémités les accumulateurs oléopneumatiques 40 et 42 qui communiquent respectivement avec la chambre inférieure 36 et avec la chambre supérieure 38 délimitées à l'intérieur de l'enceinte 32 par la masse 30. On reconnaît également le ressort de compression 44 permettant de maintenir au repos la masse de réaction 30 dans sa position centrale à l'intérieur de l'enceinte 32.

Au-dessus de l'enceinte 32, le corps 28 de la source sismique comprend une partie massive qui est représentée en section à plus grande échelle sur la figure 4. Cette partie massive du corps 28 sert à loger, dans sa partie adjacente à la chambre supérieure 38, le capteur de pression 106.

Au-dessus de ce capteur 106 et comme l'illustre mieux la figure 4, la partie massive du corps 28 supporte deux patins d'appui fixes 109 qui s'étendent parallèlement à l'axe du corps 28 et font saillie vers l'extérieur par rapport à ce dernier, en des emplacements disposés sensiblement à 120° l'un de l'autre. La partie massive du corps 28 sert également à loger les vérins 80 des moyens d'ancrage 16. Ces vérins 80 sont au nombre de quatre dans le mode de réalisation représenté et ils sont disposés dans un même plan radial orienté à 120° environ par rapport aux patins d'appui fixes 109. Le piston 81 de chacun des vérins 80 traverse de part en part le corps 28, de telle sorte qu'une extrémité porte un patin d'appui mobile 110 et que l'extrémité opposée est soumise directement à la pression du puits (cette caractéristique n'a pas été représentée sur les figures 2 et 3, afin d'en faciliter la lecture). Ainsi, chacun des pistons 81 est normalement en équilibre, sous l'effet de la pression du puits, quelle que soit la profondeur à laquelle se trouve la source.

Chacun des vérins 80 comprend une chambre de commande 89 isolée par des joints d'étanchéité 85 portés par le piston 81. Comme le montre notamment la figure 3, la pressurisation des chambres 83 de chaque paire de vérins adjacents 80 permet d'appliquer séparément l'un des patins d'appui mobile 110 articulé sur le piston 81 de chacun des deux vérins.

Grâce à cet agencement, lorsque les vérins 80 sont actionnés, les patins d'appui mobiles 110 sont appliqués contre la surface intérieure du puits cuvelé 10, et pressent par réaction les patins d'appui fixes 109 contre cette même surface, de façon à établir un contact ferme et rigide entre le corps 28 et la paroi du puits, même si cette dernière est légèrement déformée.

Comme le montre la figure 3, dans sa zone siiuée au niveau des moyens d'ancrage 16, la partie massive du corps 28 reçoit le capteur de pression 108. Au-dessus des moyens d'ancrage 16, cette partie massive sert aussi à loger l'accéléromètre 104.

Au-dessus de cette partie massive du corps 28, les enceintes 68 et 50 sont séparées par une cloison horizontale étanche 112. En descendant à partir de cette cloison 112, on trouve successivement, à l'intérieur de l'enceinte 50, l'accumulateur oléopneumatique 100, le moteur M1 et la pompe P1 du groupe basse pression 46. En dessous de la pompe P1 sont situés le capteur de pression 107, l'électrovanne 52 et l'accumulateur 98 de protection de la pompe P1.

La troisième enceinte 68 est limitée vers le haut par une cloison étanche 114 à partir de laquelle on trouve, en allant vers le bas, le moteur M2 et la pompe P2 du groupe haute pression 60, puis les électrovannes 62 et 64.

Enfin, la partie supérieure du corps tubulaire 28 sert à loger le réservoir basse pression 78. Ce réservoir 78 comprend un piston 116 mobile dans le corps tubulaire 28 pour former à l'intérieur de ce dernier une chambre inférieure 118 qui communique avec l'enceinte 68 par un passage 120 traversant la cloison 114, et une chambre supérieure 122 totalement étanche vis-à-vis de l'extérieur. Le piston 116 coulisse de façon étanche sur une tige centrale 124 servant au passage des conducteurs électriques. Un ressort de compression taré 126 entourant la tige 124 maintient initialement le piston 116 dans une position basse adjacente à la cloison 114.

Sur les figures 3 et 4, les différentes canalisations ainsi que les conducteurs électriques qui ont été décrits précédemment en se référant à la figure 2 n'ont pas été représentés dans un but de clarification. Ces canalisations et ces conducteurs cheminent généralement soit à l'intérieur du corps 28 et des cloisons 112 et 124, soit dans les enceintes formées dans le corps 28.

Lorsque la source sismique selon l'invention est descendue dans un puits de forage afin de réaliser des mesures dans le sous-sol environnant, les différents éléments constituant la source se trouvent dans les positions inactives illustrées sur la figure 2.

Lorsque la source a atteint la profondeur désirée, l'électrovanne 64 est actionnée afin de mettre en communication la canalisation 66 avec la canalisation 78. Le moteur M2 est alors mis sous tension afin d'assurer la pressurisation des vérins 80 des moyens d'ancrage 16.

Lorsqu'un ancrage ferme et direct du module principal 14 de la source 12 a été obtenu, l'électrovanne 62 est à son tour actionnée, le moteur M2 étant maintenu sous tension. L'actionnement de l'électrovanne 62 a pour effet de mettre en communication la canalisation 66 avec la canalisation 70 débouchant dans l'enceinte 50. La pression dans cette dernière enceinte s'élève lentement depuis la pression statique initiale d'environ 40 bars jusqu'à une pression maximale voisine de 400 bars. Etant donné que l'enceinte 50 communique avec l'enceinte 32 contenant la masse de réaction 30 au travers de la canalisation 48, de l'électrovanne 52 et de la canalisation 54, la pression dans la chambre supérieure 38 ainsi que dans la chambre inférieure 36 s'élève également pour atteindre la même valeur.

Lorsque cette pression statique initiale est atteinte à la fois dans les chambres 36 et 38, l'électrovanne 52 est excitée selon un cycle d'excitation alternatif permettant de la faire passer alternativement dans l'un et l'autre de ses deux états à une fréquence déterminée qui est choisie afin de coïncider avec la fréquence de résonance du système résonant 26. La pression dans la chambre supérieure 38 subit ainsi des oscillations périodiques d'une amplitude voisine de 40 bars autour de la pression statique régnant dans l'enceinte 32.

Simultanément à l'excitation périodique de l'électrovanne 52, l'électrovanne 62 est à nouveau actionnée pour passer dans son deuxième état actif dans lequel l'enceinte 50 communique avec l'enceinte 68 au travers de la restriction 74. Par conséquent, le phénomène d'oscillation rapide de la pression dans la chambre 38 s'accompagne d'une décroissance régulière et progressive de la pression statique régnant dans l'enceinte 32, cette pression statique chutant par exemple d'environ 400 bars à environ 50 bars en une période T qui peut varier entre environ 10 secondes et environ 30 secondes, selon l'ouverture de la restriction 74.

Il est à noter que la diminution de la pression statique à l'intérieur de l'enceinte 32 est suffisamment lente pour qu'un équilibre de cette pression statique s'effectue entre les chambres 38 et 36 au travers du passage de section réduite formé par les paliers lisses 34. En revanche, la fréquence des variations de pression dans la chambre supérieure 38 induite par l'excitation alternative de l'électrovanne 52, qui varie par exemple entre 30 et 120 Hz, est suffisamment rapide pour que cette variation ne soit pas transmise à la chambre inférieure 36.

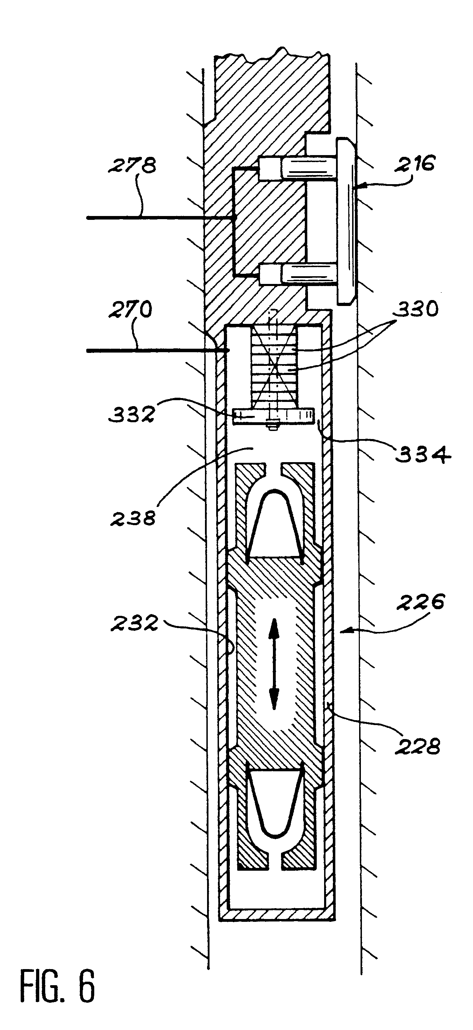

La variation contrôlée de la pression statique à l'intérieur de l'enceinte 32 se traduit par une variation contrôlée de la fréquence de résonance du système résonant 26. Conformément à l'invention, le module de commande électronique 18 ou l'ensemble électronique de surface 22 permet d'accorder en permanence la fréquence d'excitation de ce système induite par l'actionnement alternatif de l'électrovanne 52 avec la fréquence de résonance du système 26, comme l'illustre la courbe de la figure 5. De cette manière, on obtient grâce à l'effet de résonance du système 26 une amplification notable de la force sinusoïdale verticale induite par la source, qui peut atteindre environ 20000 N, tout en assurant un balayage en fréquence favorable à un bon traitement des mesures obtenues à l'aide des récepteurs. En particulier, ce balayage en fréquence est choisi de préférence afin de correspondre à la bande passante du sous-sol, habituellement située entre environ 30 Hz et environ 120 Hz.

Par ailleurs, la localisation de la masse de réaction mobile 30 dans une enceinte étanche vis-à-vis du fluide contenu dans le puits permet d'éviter que les ondes induites par les mouvements de cette masse ne se propagent dans le fluide du puits.

Dans le mode de réalisation préféré de l'invention, l'asservissement de la fréquence d'excitation de l'électrovanne 52 sur la fréquence de résonance du système résonant 26 est assuré à partir des mesures effectuées par les capteurs de pression 106 et 107, qui mesurent respectivement la pression dans la chambre supérieure 38 du système résonant 26 et la pression dans l'enceinte 50. Ces pressions sont liées, respectivement, au débit de fluide hydraulique induit par les déplacement alternatifs de la masse de réaction 30, et au débit du fluide hydraulique injecté par l'électrovanne 52. Par conséquent, en maintenant en permanence un déphasage de $\frac{\pi}{2}$ entre la composante alternative de la pression régnant dans l'enceinte 50, par rapport à la composante alternative de la pression mesurée dans la chambre 38 par le capteur de pression 106, on assure l'entretien de la résonance du système résonant 26 pour un apport d'énergie minimal.

Pour parvenir à ce résultat, on filtre tout d'abord les signaux délivrés par chacun des capteurs de pression 106 et 107, afin d'en éliminer la composante continu, pour ne conserver que la composante alternative. On mesure ensuite la phase de la composante alternative de chacun des signaux, puis on calcule la différence de phase. Tant que cette différence de phase reste égale à 90° ± E (E étant une erreur admissible, par exemple de 5°), la fréquence du signal d'excitation de l'électrovanne 52 n'est pas modifiée.

Au contraire, si la différence de phase est supérieure à 90° + E ou inférieure à 90° - E, on modifie la fréquence du signal d'excitation de l'électrovanne 52. La modification consiste à augmenter ou à diminuer cette fréquence d'une valeur donnée, selon que la différence de phase est supérieure à 90° + E ou inférieure à 90° - E, respectivement.

Dans la pratique, les fonctions d'asservissement décrites ci-dessus (mesure des phases des deux signaux, calcul de la différence de phase, comparaison avec la différence de phase souhaitée de 90° ± E, et émission d'un signal alternatif asservi en fréquence) peuvent être remplies par l'appareil de la Société Brüel & Kjœr commercialisé sous la dénomination "Resonance Dwell Unit - Type 5885", associé à l'appareil "Vibration Exciter Control 1050" de la même Société. Ces moyens d'asservissement 23 (figure 2) sont placés en surface dans l'ensemble électronique 22 et reliés au module électronique 18 par trois conducteurs électriques du câble 24. Le filtrage des signaux délivrés par les capteurs de pression 106 et 107 est assuré par le module électronique 18.

Les fréquences des deux signaux de mesure de pression transmis vers la surface par le câble 24, ainsi que la fréquence du signal de commande de l'électrovanne 52 transmis au fond par ce même câble (qui varient entre 30 et 120 Hz) sont voisines de la fréquence des signaux de puissance transmis au fond par le câble 24 afin d'alimenter les moteurs M1 et M2 (60 Hz). Par conséquent, afin d'éviter tout brouillage des signaux de mesure et du signal de commande par les signaux de puissance à l'intérieur du câble, les deux signaux de mesure sont modulés dans le module électronique 18, par exemple à 10 kHz et à 20 kHz, puis démodulés en surface. Inversement, le signal de commande de l'électrovanne 52 est modulé en surface à une troisième fréquence, et démodulé dans le module électronique 18.

Dans une variante de réalisation permettant également de résoudre ce dernier problème, les moyens d'asservissement peuvent être placés directement dans le module électronique 18. Cette variante a aussi pour avantage d'accroître la disponibilité du câble pour la transmission d'autres signaux électriques.

La figure 6 illustre une variante de réalisation de l'invention, particulièrement adaptée pour travailler à des fréquences plus élevées (environ 100 à 1000 Hz). Sur cette figure, les organes remplissant les mêmes fonctions que dans le premier mode de réalisation décrit sont désignés par les mêmes chiffres de référence, augmentés de 200.

Le système résonant 226, qui n'est pas représenté en détail, présente une structure identique à celle du système résonant 36 des figures 2 et 3. Il en est de même de la partie de la source servant à produire la pression statique initiale et à faire décroître progressivement cette pression (non représentée), qui communique directement avec la chambre supérieure 238 de l'enceinte 232 par le passage 270.

En revanche, la variation sinusoïdale de la pression dans l'enceinte 232 est obtenue par des moyens totalement différents, qui comprennent dans ce cas un empilement de pastilles de céramique piézoélectrique 330, dont une extrémité est fixée sur la face supérieure de l'enceinte 232 et dont l'extrémité opposée porte un piston 332.

L'empilement de pastilles 330 ainsi que le piston 332 sont agencés au-dessus du système résonant 226, selon l'axe vertical du corps 228. Le piston 332 sépare la chambre 238 en deux parties, de volume variable, qui communiquent entre elles par un passage annulaire 334, de section réduite, formée entre le bord périphérique du piston 332 et la surface intérieure cylindrique de l'enceinte 232.

Le piston 332 est relié à la face supérieure de l'enceinte 232 par une tige calibrée (non représentée) traversant les pastilles 330 selon l'axe du corps 228. Cette liaison est assurée de façon à appliquer sur les pastilles de céramique piézoélectrique une précontrainte nécessaire à leur fonctionnement. Pour cela, une vis ou un écrou est placé à l'extrémité de la tige.

Les pastilles 330 comportent sur chacune de leurs faces des languettes de raccordement par lesquelles ces pastilles sont reliées en parallèle à un circuit électrique d'alimentation (non représenté) délivrant des impulsions électriques à une fréquence déterminée, réglable. Chacune de ces impulsions a pour effet un accroissement de l'épaisseur de l'empilement de pastilles 330 et, par conséquent, un déplacement vers le bas du piston 332. Entre deux impulsions consécutives, les pastilles 330 reprennent leur épaisseur initiale, ce qui se traduit par une remontée du piston 332 dans l'enceinte 232.

Etant donné la fréquence des impulsions appliquées aux pastilles de céramique piézoélectrique 330, la pression n'a pas le temps de s'équilibrer de part et d'autre du piston 332 par le passage annulaire 334, de section réduite. On applique ainsi, en dessous du piston 332, une pression hydraulique sinusoïdale, à la fréquence des impulsions électriques transmises aux pastilles. En accordant en permanence cette fréquence sur la fréquence de résonance du système résonant 226, tout en faisant évoluer cette fréquence de résonance de la même manière que dans le premier mode de réalisation de l'invention, on réalise un balayage en fréquence que l'on ajuste sur la bande passante de la formation.

Dans cette variante de réalisation, l'enceinte 68 est supprimée, de telle sorte que l'enceinte 50 (non représentée sur la figure 6) est placée immédiatement au-dessus de l'enceinte 232, seuls les moyens d'ancrage 216 étant interposés entre les deux enceintes.

Bien entendu, l'invention n'est pas limitée aux modes de réalisation qui viennent d'être décrits à titre d'exemples, mais en couvre toutes les variantes. Ainsi, la pression hydraulique sinusoïdale peut aussi être engendrée par un système magnéto-strictif ou par un système électro-dynamique, sans sortir du cadre de l'invention.

Par ailleurs, le groupe haute pression 60 peut être relié à chacune des chambres 36 et 38 au travers de l'électrovanne 62. Dans ce cas, les deux chambres peuvent être étanches l'une par rapport à l'autre.

## Revendications

1. Source sismique de fond, comprenant un corps (28) apte à être ancré à la paroi d'un puits de forage par des moyens d'ancrage (16), et dans lequel sont logés un système résonant (26) et des moyens d'excitation (46,52) de ce système résonant à une fréquence d'excitation accordée sur la fréquence de résonance de ce dernier, caractérisée par le fait que des moyens (60,62,74) sont prévus pour faire varier de façon contrôlée la fréquence de résonance du système résonant (26) lors d'un actionnement des moyens d'excitation (46,52).

2. Source sismique selon la revendication 1, caractérisée par le fait que le système résonant (26) comprend une masse de réaction mobile (30) dans une première enceinte (32) formée dans le corps (28), ladite masse délimitant à l'intérieur de l'enceinte deux chambres opposées (36,38) communiquant avec des moyens élastiques respectifs (40,42), les moyens d'excitation comprenant des moyens (46,52) pour appliquer dans au moins une première des chambres opposées une pression hydraulique sinusoïdale, à ladite fréquence d'excitation, et les moyens pour faire varier la fréquence de résonance comprenant des moyens (60,62,74) pour appliquer dans la première enceinte (32) une pression hydraulique statique variant de façon contrôlée.

3. Source sismique selon la revendication 2, caractérisée par le fait que les moyens pour appliquer une pression hydraulique statique variant de façon contrôlée comprennent des moyens (60,62) pour appliquer dans la première enceinte (32) une pression statique initiale et des moyens (74) pour commander une variation progressive de cette pression statique initiale.

4. Source sismique selon la revendication 3, caractérisée par le fait que les moyens pour appliquer une pression statique initiale comprennent un groupe d'alimentation hydraulique haute pression (60) apte à communiquer avec la première enceinte (32), au travers d'une première électrovanne (62).

5. Source sismique selon la revendication 4, caractérisée par le fait que les moyens pour commander une décroissance progressive de la pression statique initiale comprennent une restriction (74) placée dans une canalisation (70,72) contrôlée par la première électrovanne (62) et au travers de laquelle la première enceinte communique avec un réservoir basse pression (68).

6. Source sismique selon la revendication 5, caractérisée par le fait que ladite restriction (74) a une section réglable.

7. Source sismique selon l'une quelconque des revendications 5 et 6, caractérisée par le fait que le réservoir basse pression est formé dans une deuxième enceinte (68) contenant le groupe d'alimentation hydraulique haute pression (60) et la première électrovanne (62), cette deuxième enceinte communiquant avec un accumulateur (76) de régulation de pression.

8. Source sismique selon l'une quelconque des revendications 5 à 7, caractérisée par le fait que les moyens d'ancrage (16) comprennent au moins un vérin d'actionnement hydraulique (80) communiquant avec le groupe d'alimentation hydraulique haute pression (60) au travers d'une deuxième électrovanne (64).

9. Source sismique selon la revendication 8, caractérisée par le fait qu'elle comprend des moyens (108) pour mesurer la pression dans le vérin d'actionnement hydraulique (80).

10. Source sismique selon l'une quelconque des revendications 8 et 9, caractérisée par le fait que chacun des vérins d'actionnement hydraulique (80) comporte un piston (81) traversant de part en part le corps (28), un patin mobile (110) étant articulé sur les pistons (81) de deux vérins d'actionnement hydraulique adjacents (80), le corps (28) supportant également deux patins d'appui fixes (109).

11. Source sismique selon l'une quelconque des revendications 5 à 10, caractérisée par le fait que ladite canalisation (70,72) débouche dans une troisième enceinte (50) contenant un groupe d'alimentation hydraulique basse pression (46) communiquant avec au moins une desdites chambres au travers d'une troisième électrovanne (52) formant lesdits moyens pour appliquer une pression hydraulique sinusoïdale.

12. Source sismique selon les revendications 7 et 11 combinées, caractérisée par le fait que la troisième enceinte (50) est disposée entre la première enceinte (32) et la deuxième enceinte (68), à l'intérieur du corps (28), la première enceinte (32) étant située en bas lorsque la source est placée dans un puits de forage.

13. Source sismique selon la revendication 12, caractérisée par le fait que les moyens d'ancrage (16) sont placés entre la première enceinte (32) et la troisième enceinte (50).

14. Source sismique selon l'une quelconque des revendications 11 à 13, caractérisée par le fait qu'elle comprend des moyens (106) pour mesurer la pression dans au moins une desdites chambres (38), des moyens (107) pour mesurer la pression dans la troisième enceinte (50), et des moyens d'asservissement (23) sensibles à des signaux de mesure délivrés par ces deux moyens de mesure de pression (106, 107), pour délivrer un signal alternatif de commande de la troisième électrovanne (52), déphasé d'environ 90° par rapport à la composante alternative du signal de mesure délivré par les moyens (106) pour mesurer la pression dans au moins une chambre.

15. Source sismique selon l'une quelconque des revendications 5 à 10, caractérisée par le fait que ladite canalisation (270) débouche directement dans la première enceinte (232), les moyens pour appliquer une pression hydraulique sinusoïdale comprenant au moins un empilement de pastilles piézoélectriques (330) placé dans la première chambre (238) entre une paroi d'extrémité de la première enceinte et un piston (332) séparant la première chambre en deux parties de volume variable, communiquant entre elles par un passage de section réduite.

16. Source sismique selon la revendication 15, caractérisée par le fait que la première enceinte (232) et la deuxième enceinte sont disposées dans cet ordre à l'intérieur du corps (228), la première enceinte (232) étant située en bas et la première chambre (238) étant située en haut de cette première enceinte lorsque la source est placée dans un puits de forage.

17. Source sismique selon la revendication 16, caractérisée par le fait que les moyens d'ancrage sont placés entre la première enceinte (232) et la deuxième enceinte.

18. Source sismique selon l'une quelconque des revendications 2 à 17, caractérisée par le fait que chacun des moyens élastiques est formé par un accumulateur oléopneumatique (40,42).

19. Source sismique selon l'une quelconque des revendications 2 à 18, caractérisée par le fait que la masse de réaction (30) coulisse dans la première enceinte parallèlement à un axe longitudinal du corps (28), des moyens élastiques (44) maintenant au repos la masse de réaction dans une position médiane à l'intérieur de la première enceinte.

20. Source sismique selon la revendication 19, caractérisée par le fait que la masse de réaction (30) coulisse dans la première enceinte par l'intermédiaire de deux paliers lisses (34) formant un passage de section réduite entre lesdites chambres opposées (36,38), les moyens (60,62) pour appliquer une pression hydraulique statique dans la première enceinte communiquant avec au moins une desdites chambres, au travers des moyens (46,52) pour appliquer une pression hydraulique sinusoïdale.

21. Source sismique selon l'une quelconque des revendications 2 à 20, caractérisée par le fait qu'elle comprend des moyens (104) pour mesurer les accélérations transmises au corps (28) par le système résonant (26).

22. Source sismique selon l'une quelconque des revendications précédentes, caractérisée par le fait qu'elle comprend un module de commande électronique (18) dépourvu de moyens d'ancrage situé à l'extérieur du corps (28), au-dessus de ce dernier lorsque la source est placée dans un puits de forage, et relié audit corps par un câble (20) découplant mécaniquement le module de commande électronique du corps.

23. Procédé de création d'ondes acoustiques à partir d'un puits de forage, au moyen d'une source sismique de fond comprenant un système résonant (26) et des moyens d'excitation (46,52) de ce système résonant, dans lequel on excite le système résonant à une fréquence d'excitation accordée sur la fréquence de résonance de ce système, caractérisé en ce que l'on fait varier de façon contrôlée la fréquence de résonance du système résonant, tout en excitant ce système, de façon à effectuer un balayage en fréquence à une fréquence d'excitation qui reste accordée sur la fréquence de résonance du système résonant.

24. Procédé selon la revendication 23, caractérisé par le fait que, le système résonant comprenant une masse de réaction (30) mobile dans une enceinte (32) et délimitant dans cette dernière deux chambres opposées communiquant avec des moyens d'amortissement respectifs (40,42), on excite ce système en appliquant dans au moins une desdites chambres une pression hydraulique sinusoïdale, et on fait varier la fréquence de résonance, en appliquant dans ladite enceinte une pression hydraulique statique variant de façon contrôlée.

25. Procédé selon la revendication 24, caractérisé par le fait qu'on applique une pression hydraulique statique initiale dans ladite enceinte puis on applique la pression hydraulique sinusoïdale dans la première chambre tout en faisant varier progressivement la pression statique initiale.

FIG. 1

FIG. 5

FIG. 2

FIG. 3

EP 0 442 812 A1
EP 0 442 812 A1

FIG. 4

278

216

270

330

332

334

238

232

226

228

FIG. 6

EP 0 442 812 A1

Office européen
des brevets

**RAPPORT DE RECHERCHE EUROPEENNE**

Numero de la demande

EP    91 40 0371

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4862990 (J.H.COLE)<br>* colonne 1, ligne 62 - colonne 2, ligne 47 *<br>* colonne 4, lignes 34 - 55 *<br>* revendications 1, 11, 12 * | 1, 2,<br>23, 24 | G01V1/135<br>G01V11/00 |
| Y | | 15 | |
| A | | 3-7, 21 | |
| | --- | | |
| X | US-A-4815557 (W.D.DUWE)<br>* colonne 5, ligne 30 - colonne 6, ligne 25 * | 1-3, 23,<br>24 | |
| | --- | | |
| X | US-A-3978940 (J.V.BOUYOUCOS)<br>* colonne 2, lignes 5 - 37 * | 1-3,<br>23-25 | |
| | --- | | |
| P,Y | EP-A-397318 (HALLIBURTON GEOPHYSICAL SERVICES)<br>* colonne 2, ligne 50 - colonne 3, ligne 10 * | 15 | |
| | --- | | |
| A | EP-A-331428 (WESTERN ATLAS INTERNATIONAL, INC)<br>* abrégé * | 1-3 | |
| | ----- | | |

| | |
|---|---|
| | DOMAINES TECHNIQUES RECHERCHES (Int. Cl.5) |
| | G01V |

Le présent rapport a été établi pour toutes les revendications

| Lieu de la recherche | Date d'achèvement de la recherche | Examinateur |
|---|---|---|
| LA HAYE | 22 MAI 1991 | SWARTJES H.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)

18